(19) Europäisches Patentamt

European Patent Office

Office européen des brevets

(11) EP 0 596 535 B1

(12) **EUROPÄISCHE PATENTSCHRIFT**

(45) Veröffentlichungstag und Bekanntmachung des Hinweises auf die Patenterteilung:
**16.04.1997 Patentblatt 1997/16**

(51) Int Cl.$^6$: **G01B 7/02**, G01D 5/16

(21) Anmeldenummer: 93118089.7

(22) Anmeldetag: **08.11.1993**

(54) **Verfahren zur hochauflösenden Messung von Linear- und Drehpositionen**

High-resolution measuring method for linear and rotary positions

Méthode de mesure à haute résolution de positions linéaires et tournantes

(84) Benannte Vertragsstaaten:
**AT BE CH DE DK ES FR GB IT LI LU NL SE**

(30) Priorität: **06.11.1992 DE 4237540**

(43) Veröffentlichungstag der Anmeldung:
**11.05.1994 Patentblatt 1994/19**

(73) Patentinhaber:
- **HELMUT HUND GmbH**
  **D-35580 Wetzlar (DE)**
  Benannte Vertragsstaaten:
  **DE**
- **Lust Antriebstechnik GmbH**
  **D-35633 Lahnau (DE)**
  Benannte Vertragsstaaten:
  **DE**
- **Kröplin GmbH**
  **D-36381 Schlüchtern (DE)**
  Benannte Vertragsstaaten:
  **DE**
- **Märzhäuser Wetzlar GmbH & Co. KG**
  **D-35579 Wetzlar (DE)**
  Benannte Vertragsstaaten:
  **BE CH DE DK ES FR GB IT LI LU NL SE AT**
- **LEICA MIKROSKOPIE UND SYSTEME GmbH**
  **D-35578 Wetzlar (DE)**
  Benannte Vertragsstaaten:
  **DE**

(72) Erfinder:
- **Dettmann, Fritz**
  **D-35764 Sinn-Edingen (DE)**
- **Loreit, Uwe**
  **D-6330 Wetzlar 21 (DE)**

(74) Vertreter: **Schubert, Siegmar, Dipl.-Ing. et al**
**Patentanwälte**
**Dr. Weinhold, Dannenberg,**
**Dr. Gudel, Schubert**
**Grosse Eschenheimer Strasse 39**
**60313 Frankfurt (DE)**

(56) Entgegenhaltungen:
EP-A- 0 369 493    EP-A- 0 461 300
EP-A- 0 554 518    DD-A- 250 369
DE-A- 2 642 925    DE-A- 4 017 898
US-A- 5 036 276

- ELECTRONIC COMPONENTS & APPLICATIONS, Bd.8, Nr.4, 1988, Eindhoven NL, Seiten 222-239, XP213514; A. PETERSEN : 'The magnetoresistive sensor'

## Beschreibung

Die Erfindung betrifft ein Verfahren zur Positionsmessung mit einem periodischen Maßstab und einem dagegen in Längsrichtung beweglichen Sensor, das zur präzisen Ermittlung von Abständen und Positionen in gerader Linie oder auf gekrümmten, z. B. kreisförmigen Linien, dient. Solche Messungen werden in zunehmendem Maße im Maschinenbau, in der Feinwerktechnik oder in der Technologie der Halbleiterbauelemente erforderlich.

Verfahren zur Längenmessung mit periodisch strukturiertem Maßstab und dagegen beweglichem Sensor sind allgemein bekannt. Um jedoch mit den bekannten Verfahren eine höhere Auflösung zu erreichen, ist es erforderlich, die Periodenlänge des Maßstabes herabzusetzen, um bei gleichem Interpolationsgrad auf die angestrebte minimale nachweisbare Länge zu kommen. Dem steht bei magnetischen Längenmeßanordnungen grundsätzlich die Tatsache entgegen, daß das Magnetfeld eines periodisch magnetisierten Maßstabes mit dem Abstand von der Maßstaboberfläche sehr stark abnimmt und in einem Abstand, der der Periodenlänge etwa entspricht, kaum noch nachweisbar ist. Die Justierung des Sensors gegenüber dem Maßstab im Mikrometerabstand ist technisch nur mit dem höchsten Aufwand realisierbar. Gegen die Erhöhung des Interpolationsgrades spricht gerade bei kleinen Periodenlängen die Meßungenauigkeit, die sich aus der starken Abstandsabhängigkeit des Magnetfeldes ergibt. Auch bei optischen Meßsystemen wächst bei der notwendigen Verkleinerung der Periodenlängen der Justieraufwand überproportional aus einfachen geometrischen Gründen an. Jede Fehljustierung, besonders in der Parallelität der Maßstabsgitterstreifen zu den Sensorgitterstreifen, führt zu einem Verlust an Signalhöhe, so daß der gleiche Interpolationsgrad bei Verkleinerung der Maßstabsperiode praktisch nicht gehalten werden kann.

Ein Vorschlag, wie mit magnetischen Maßstäben und magnetoresistiven Sensoren bessere Längenauflösungen erreicht werden können, liegt mit der Offenlegungsschrift DE 33 25 353 vor. Hier werden n nebeneinanderliegende Magnetspuren verwendet, über denen sich auch n Sensoren parallel nebeneinander befinden. Die Magnetspuren sind in ihrem periodischen Magnetisierungsmuster gleich, die Perioden sind aber um den Bruchteil der Periode, der sich bei ihrer Division durch n ergibt, gegenüber versetzt. Die Auflösung, die sich damit realisieren läßt, ist um einen Faktor n besser, als die mit einer einfachen Einspuranordnung erreichbare.

Die Schwierigkeiten, die sich bei dieser Anordnung ergeben, liegen einerseits darin, daß die vielen nebeneinanderliegenden Magnetspuren mit ihrem geringen Versatz gegeneinander mit gleicher Amplitude geschrieben werden müssen, was einen äußerst hohen Aufwand an Justiergenauigkeit erfordert. Der gleiche Aufwand ist dann noch einmal bei der Positionierung des Sensors gegenüber dem Maßstab aufzubringen. Dabei muß sowohl der Abstand der Einzelsensoren über der gesamten Breite des Maßstabes mit seinen vielen Spuren als auch der Winkel der Sensoroberfläche zu Maßsstabslängsrichtung hochpräzise eingestellt werden.

In einer ganzen Reihe von Druckschriften (EP 0 554 518 A1, EP 0 461 300 A1, US 5 036 276, OS-DE 4 017 898 A1 und OS-DE 2 642 925) werden unterschiedliche Ausführungsformen von Längenmeßanordnungen beschrieben, bei denen über dem periodisch strukturierten Maßstab zwei oder mehr Sensorelemente, die gegeneinander um einen Bruchteil der Periodenlänge, der von der halben Periodenlänge verschieden sein muß, in Meßrichtung versetzt angeordnet sind. Vorzugsweise beträgt der Versatz ein Viertel der Periodenlänge. Die Signale der mindestens zwei Sensoren sind bezüglich der Koordinate der Meßrichtung periodisch. Üblicherweise werden aus den Sensorsignalen Rechtecksignale geformt, die eine inkrementale Zählung der bei der Bewegung zwischen Maßstab und Sensorsystem bereits zurückgelegte Zahl ganzer Perioden zulassen. Zur Anzeige von Bruchteilen der Periodenlänge werden verschiedene Verfahren der Interpolation im allgemeinen Sinne angegeben, aber alle diese setzen voraus, daß die mit der Ortskoordinate periodischen Sensorsignale durch eine Sinusfunktion wiedergegeben werden können. Diese Voraussetzung ist aber normalerweise nur sehr unzureichend erfüllt. So kann der Verlauf der Lichtintensität hinter dem Schlitz eines Strichgitters eher durch eine Rechteckfunktion als durch eine Sinusfunktion dargestellt werden. Gleiches gilt für den Verlauf der magnetischen Feldstärke nahe der Oberfläche eines periodisch in entgegengesetzter Richtung bis zur Sättigung magnetisierten Maßstabes. Die Abweichungen führen zu fehlerhaften Interpolationsergebnissen, was um so mehr ins Gewicht fällt, je höher die erforderliche Auflösung ist. Schließlich bilden diese Abweichungen die Grenze einer sinnvollen Auflösung des Meßsystems, die unterhalb der für hochauflösende Meßsysteme geforderten liegt.

Eine Anordnung, die im Gegensatz zu den bisher diskutierten für ihre optimale Funktion keine Sinusform der durch den Maßstab erzeugten Größe, sondern ihren rechteckförmigen Verlauf voraussetzt, wird in der Patentschrift DD 250 369 AI vorgestellt. Hier steht einem optischen Maßstab mit periodisch abwechselnden lichtdurchlässigen und lichtundurchlässigen Bereichen eine Lichtempfängeranordnung gegenüber, die in eine Vielzahl von Einzelsensorelementen pro Maßstabsperiodenlänge in Meßrichtung aufweist. Durch zyklische Abfrage der Signale der Einzelsensorelemente kann die Verschiebung zwischen Maßstab und Sensoranordnung mit einer Auflösung von der Länge eines Einzelsensorelementes bestimmt werden, solange die vorausgesetzte Rechteckform des Helligkeitsverlaufes auch wirklich vorhanden ist. Für ein hochauflösendes Meßsystem wird jedoch mit kürzeren Periodenlängen zu arbeiten sein, und durch die Beugung wird der Rechteckübergang in einen allmählichen Übergang abgeschwächt. Weiterhin ist bei der geforderten hohen Auflösung der technologisch bedingte Mindestabstand zwischen den Einzelsensorelementen von möglicherweise einigen Zehnteln Mikrometern nicht mehr vernachlässigbar und begrenzt so die Auflösung auf einen Wert in dieser Größenordnung.

Wie auf Positionswerte zwischen einzelnen Sensorelementen mit einem Fehler, der klein gegen den Abstand derselben ist, bei einer Anordnung zur magnetischen Positionsbestimmung geschlossen werden kann, ist zwar in der Patentanmeldung EP 0 369 493 dargestellt. Hier wird jedoch die Position eines einzelnen Magneten über einem Sensorfeld bestimmt. Die Ausdehnung des Sensorfeldes muß größer sein, als die größte zu messende Längenänderung. Nachteilig an dieser Anordnung ist, daß für ein Meßsystem hoher Auflösung, das auch noch Positionsänderungen im Bereich von Nanometern anzeigen soll, in einem Abstand von der Größenordnung 10 μm Einzelsensorelemente vorhanden sein müssen. Bei einer Gesamtlänge von einigen 100 mm kommt deren Gesamtzahl dann in die Größenordnung von 10.000. Diese Sensoranordnung wäre nur bei äußerst hohen Herstellungskosten realisierbar, falls die durch den gegenwärtigen Stand der Technologie begrenzte Ausbeute für funktionierende Sensorelemente die Herstellung überhaupt zuläßt. Auch die Auswerteschaltung für diese hohe Zahl an Sensorelementen erfordert einen unvertretbar hohen Aufwand.

Vorteile des erfindungsgemäßen Verfahrens

Bei dem in den Ansprüchen beschriebenen Verfahren wird zur Längenmessung nur eine Spur eines periodisch strukturierten Maßstabes benutzt. Das erfindungsgemäße Verfahren benutzt eine Sensoranordnung, die gegenüber dem Maßstab eine wesentlich verkleinerte Strukturabmessung aufweist. Die mit den verkleinerten Strukturabmessungen mögliche, gegenüber der Maßstabsperiodenlänge wesentlich verringerte Sensorperiodenlänge ist eine Voraussetzung dafür, daß bei dem vorgeschlagenen Verfahren gegenüber der Maßstabsperiodenlänge mit einer wesentlich höheren Auflösung der Länge gearbeitet werden kann. Das ermöglicht die Verwendung größerer Maßstabsperiodenlängen. Bei größerer Periodenlänge ist die Anforderung an die Justierung des Sensors gegenüber dem Maßstab schon aus rein geometrischen Gründen wesentlich geringer. Deshalb ist eine Abnahme des Interpolationsgrades aus Justiergründen hier nicht vorhanden. Der hohe Interpolationsgrad wird auch dadurch gesichert, daß erstens Signaldifferenzen gebildet werden und zweitens im wesentlichen mit den Nulldurchgängen dieser Differenzen weitere Auswertungen vorgenommen werden. Damit werden Temperatur- und Abstandsabhängigkeiten der Signale kompensiert, die sonst zu Fehlern führen würden. Dazu kommt hier noch, daß Sensoren verwendet werden, bei denen eine Vielzahl von Einzelsensoren vorhanden sind, die das an einem bestimmten Ort der Periode vorhandene Ausgangssignal über mehrere Perioden mitteln. Damit sind höhere Maßstabstoleranzen zulässig.

Die große verwendbare Maßstabsperiode ist ebenfalls Voraussetzung für die sehr geringe Anforderung an die Verarbeitungsgeschwindigkeit bei hohen Verfahrgeschwindigkeiten zwischen Maßstab und Sensor.

Auch im Fall der magnetischen Meßanordnung sind Temperatur- und Fremdmagnetfeldeinwirkungen von äußerst geringem Einfluß auf die ermittelte Länge, da die Magnetfelder nur in ihrer relativen Größe zueinander ausgewertet werden und nur Felddifferenzen an Orten des Maßstabes ermittelt werden, die um eine halbe Periodenlänge auseinanderliegen, also bei gleicher Größe entgegengesetztes Vorzeichen haben.

Eine Temperaturdrift des Nullpunktes der Spannungsteilerausgangssignale wird durch die Verwendung gleicher magnetoresistiver Schichtstreifen in verschachtelter Anordnung vermieden und so ist es bei der magnetischen Meßanordnung gewährleistet, daß sofort am Ausgang der Sensoranordnung die für die Weiterverarbeitung notwendigen Signaldifferenzen zur Verfügung stehen, ohne daß für ihre Bildung irgendein Aufwand getrieben werden muß.

Ausführungsbeispiel

Die Erfindung wird an Ausführungsbeispielen, die weitere Vorteile des Verfahrens deutlich machen, näher erläutert. In den zugehörigen Zeichnungen zeigt

**Fig. 1** die schematische Darstellung eines periodisch strukturierten Maßstabes, den prinzipiellen periodischen Verlauf einer physikalischen Größe in der Nähe des Maßstabes und eine Messung der Ortsverteilung dieser physikalischen Größe.

In **Fig. 2** sind Meßwerte, wie sie von der Meßanordnung in der in Fig. 1 gezeigten Lage erhalten wurden, dargestellt.

**Fig. 3** zeigt einen Maßstab in seiner Ausgangslage sowie denselben Maßstab gegenüber der Sensoranordnung um eine bestimmte Strecke verschoben und dient der Erläuterung der Positionsmessung in drei Stufen.

In **Fig. 4** sind ein magnetischer Maßstab und eine zur Durchführung einer Längenmessung geeignete magnetoresistive Sensoranordnung dargestellt.

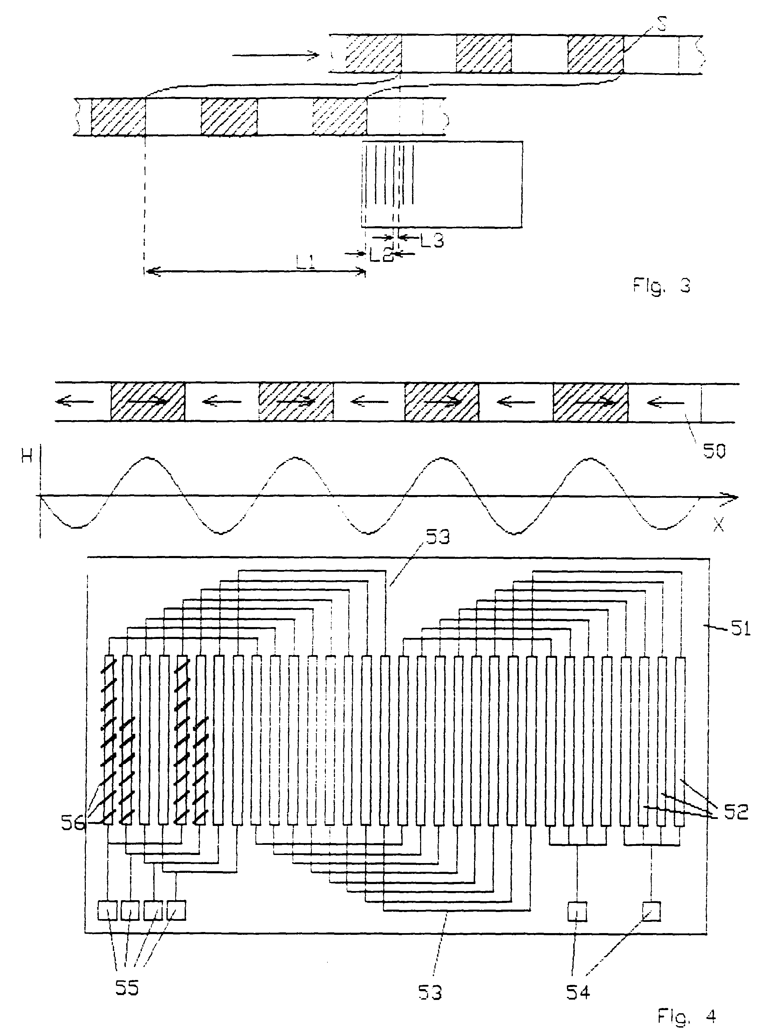

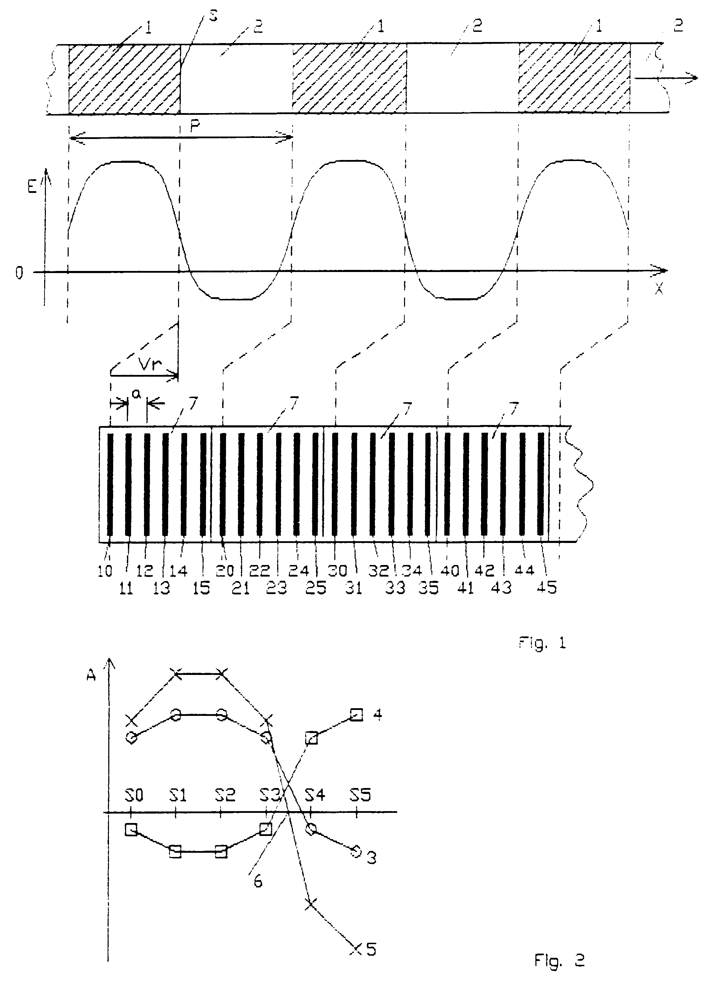

Anhand eines im oberen Teil der Fig. 1 dargestellten Maßstabes und einer im unteren Teil dargestellten Sensoranordnung wird das Verfahren zunächst vom Grundsätzlichen her erläutert. Der Maßstab ist in Längsrichtung abwechselnd aus den Bereichen 1 und den Bereichen 2 aufgebaut. Die Periodenlänge p des Maßstabes ist durch die Summe der beiden Längen der Bereiche 1 und und 2 gegeben. Die Bereiche 1 und 2 bewirken, daß in der Nähe der Maßstabsoberfäche eine physikalische Größe E über dem Ort dargestellt einen periodischen Verlauf hat. Diese physikalische Göße E kann beispielsweise ein Magnetfeld, das durch Auf - magnetisierung der Bereiche 1 und 2 in entgegengesetzter Richtung hervorgerufen wird, oder eine Lichtintesität sein, die beim Durchtritt durch einen Maßstab mit Bereichen 1 und 2 von unterschiedlicher Lichtdurchlässigkeit entsteht. Für das erfindungsgemäße Verfahren ist die Kurvenform des periodischen Verlaufs der phsikalischen Größe E in Abhängigkeit von der Position x nicht auf bestimmte Funktionen (wie z.B. die Sinusfunktion) festgelegt. Notwendig ist lediglich ein stetiger Verlauf der Funktion E(x). Bei der Durchführung des Verfahrens befindet sich die Sensoranordnung, die aus einer Vielzahl von Bereichen 7 entsteht, in unmittelbarer Nähe des Maßstabes und zwar so, daß die Maßstabsoberfläche und die Sensoranordnungsoberfläche sich parallel gegenüberstehen. In der Figur sind die beiden genannten Teile der Deutlichkeit halber nebeneinander dargestellt.

Die Sensoranordnung ist in gleichlange Abschnitte 7 aufgeteilt. Die Länge jedes Abschnittes stimmt mit der halben Maßstabsperiodenlänge p/2 überein. In jedem Abschnitt 7 ist die Lage der Einzelsensorelemente 10-15, 20-25, 30-35 usw. völlig gleich. Der Abstand a aller Sensoreinzelelemente ist gleich. Im dargestellten Beispiel sind in jedem Abschnitt 7 sechs Einzelsensorelemente 10-15, 20-25, 30-35 usw. vorhanden. Der Anfangsort des Maßstabes ist mit S gekennzeichnet. Die Sensoranordnung ist gegenüber diesem Anfangswert S um die Strecke $V_r$ verschoben.

Jedes Einzelsensorelement 10-15, 20-25, 30-35 usw. gibt ein Ausgangssignal A, z.B. in Form einer Spannung oder eines Stromes, ab, das proportional zu dem Wert der physikalischen Größe E an seinem Ort ist. Alle Einzelsensorelemente 10-15, 20-25, 30-35 usw. haben die gleiche Meßempfindlichkeit.

Die Ausgangssignale A der Einzelsensorelemente 10-15 sind für die in Fig. 1 gezeigte Position in Fig. 2 als Kurve 3 dargestellt. Die Ausgangssignale A der Einzelsensorelemente 20-25 gibt Kurve 4 wieder. Erfindungsgemäß werden Differenzen der Ausgangssignale A der Einzelsensorelemente gebildet, die jeweils um eine halbe Maßstabsperiodenlänge p/2 gegeneinander versetzt sind, also zwischen den Einzelsensorelementen 10 und 20, 11 und 21, 12 und 22 usw. Diese Einzelsensorelemente bilden so die Sensorelementepaare S 0, S 1, S 2 usw. Die Ausgangssignale der Sensorelementepaare S 0, S 1, S 2 usw. sind in Fig. 2 als Kurve 5 dargestellt. Die Kurve 5 hat gegenüber den Kurven 3 und 4, die den Verlauf der physikalischen Größe im ersten und zweiten Abschnitt 7 der Sensoranordnung wiedergeben, den Vorteil, daß sie bezüglich ihrer Auslenkung nullsymmetrisch ist und daß ihr Nulldurchgang 6 vom Ort des ersten Einzelsensorelementes 10 genau um den Versatz $V_r$ entfernt liegt. Eine Verschiebung kann also stets aus der Lage des Nulldurchgangs abgelesen werden. Äußere Einflüsse auf die Einzelsensorelemente 10-15, 20-25 usw., wie Temperatur oder im Falle magnetischer Sensoren von homogenen Störfeldern, wirken sich auf alle Sensorelemente in gleichem Maße aus und verändern die Signalamplitude. Die Nulldurchgänge der Signale der Sensorpaare S 1 usw. werden aber davon nicht beeinflußt. Ebenso sind Signaländerungen, die aus der Änderung des Abstandes zwischen Maßstab und Sensoranordnung resultieren, wegen ihres gleichen Einflusses auf alle Einzelsensorelemente auf den Nulldurchgang 6 ohne Wirkung.

Um die Größe der Verschiebung des Maßstabes gegenüber der Sensoranordnung quantitativ zu ermitteln, wird also der Nulldurchgang 6 der Ausgangssignaldifferenzen 5 benutzt. Im dargestellten Beispiel liegt der Nulldurchgang 6 zwischen den Sensorpaaren S 3 und S 4. Damit entspricht der Versatz $V_r$ drei (von S 3 abgeleitet) Einzelsensorabständen a ( $L_2 = 3\,a$) und zusätzlich einem Bruchteil des Einzelsensorabstandes, der durch Interpolation aus den Ausgangssignaldifferenzen von S 3 und S 4 erhalten wird nach

$$L_3 = a \bullet A(S3) / (A(S3) - A(S4))$$

Ist die Verschiebung des Maßstabes gegenüber der Sensoranordnung größer als eine halbe Maßstabsperiodenlänge p/2, so ergibt sich in den Ausgangssignalen der Sensorelementepaare S 0, S 1 usw. ein Nulldurchgang, in dem der Anstieg des Signals über der Sensorposition das umgekehrte Vorzeichen hat, als in Fig. 2 gezeigt. In diesem Fall ist bei der Positionsberechnung eine weitere halbe Maßstabsperiode zu addieren.

In Fig. 3 ist dargestellt, daß der Maßstab gegenüber der Sensoranordnung um eine Stecke verschoben ist, die mehr als eine ganze Maßstabsperiodenlänge p lang ist. Um die Zahl der ganzen Maßstabsperioden zu ermitteln, die in dieser Strecke enthalten ist, wird das Ausgangssignal des ersten Sensorelementenpaares S 0 und das Ausgangssignal des um ein Viertel der Periodenlänge p versetzten Sensorelementepaares S 3 während der Verschiebung ständig gemessen. Aus diesen beiden Signalen wird nach üblichen inkrementalen Zählverfahren die Zahl $n_1$ der ganzen Maßstabsperioden p ermittelt. Vor- und Rückwärtsbewegungen werden aus den beiden Signalen in den bekannten Verfahren erkannt. Die Gesamtverschiebung für den in Fig. 3 dargestellten Fall ergibt sich so zu

$$V_r = L_1 + L_2 + L_3,$$

mit $L_1 = n_1 \bullet p$ und $L_2 = n_2 \bullet a$ und $L_3$ nach der oben angegebenen Beziehung.

Für die Durchführung des Verfahrens, soweit es bisher vorgestellt wurde, werden nur die Einzelsensorelemente 10-15 und 20-25 in zwei Abschnitten 7 der Sensoranordnung benötigt, die zusammen die Länge einer Maßstabsperiode p haben. Eine weitere Verbesserung des Verfahrens ist jedoch dadurch möglich, daß die Ausgangssignale aller gleichen Einzelsensorelemente 10-15, 20-25, 30-35 usw., die über viele Abschnitte 7 in gleichem Abstand a angeordnet sind, benutzt werden. So wird das Ausgangssignal des Einzelsensorelements 10 zu dem des um eine ganze Maßstabsperiode versetzt angeordenten 30 addiert, ebenso werden die Signale der Einzelsenssorelemente 20 und 40 zusammengefaßt. Erst mit diesen Summen wird die Ausgangssignaldifferenz 5 gebildet. Dadurch wird eine Mittelung der Signale über zwei Maßstabsperioden p durchgeführt. Gleiches gilt natürlich dann auch für die Einzelsensorelemente 11 und 31 sowie 21 und 41 usw. entsprechend.

Darüber hinaus ist die Singalmittelung durch Hinzunahme weiterer um eine ganze Maßstabsperiode p versetzter Einzelsensorelemente über eine Vielzahl von Periodenlängen p vorgesehen, was in der Fig. 1 der Übersichtlichkeit halber jedoch nicht dargestellt ist. Durch die Signalmittelung werden die Meßsignale wesentlich genauer, so daß ein hoher Interpolationsgrad ermöglicht wird, der die Voraussetzung für eine hohe Längenauflösung ist. Die Anforderungen an die Positionsgenauigkeit des Maßstabes gegenüber der Sensoranordnung bleiben dabei nach wie vor sehr gering.

Eine spezielle Ausführung des Verfahrens mit Magnetmaßstab und magnetoresistiver Sensoranordnung ist in Fig.4 dargestellt. Die Magnetspur 50 des Maßstabes ist gegenüber dem Sensorchip 51 in der Breitenrichtung verkleinert gezeichnet. Sowohl für die Magnetspurbreite 50 als auch für die Breite des Sensorchips 51 sind Werte im mm-Bereich vorgesehen. Die Magnetspur 51 weist in gleichmäßigen Abständen in positiver und negativer Richtung magnetisierte Bereiche auf. Damit ist ein periodisches Magnetfeld H(x) vorhanden. Als Einzelsensorelemente sind auf dem Chip 51 in gleichmäßigem Abstand magnetoresistive Schichtstreifen 52 angeordnet. Die Schichtstreifen 52 tragen alle gleiche Barberpolstrukturen 56 mit gleichem Winkel. Pro halber Maßstabsperiode sind jeweils vier Schichtstreifen 52 vorhanden.

Die jeweils um eine ganze Maßstabsperiodenlänge versetzt angeordneten Schichtstreifen 52 sind durch Verbindungsleitungen 53 hintereinander geschaltet. Die jeweils um eine halbe Maßstabsperiode versetzten hintereinander geschalteten Schichtstreifen 52 bilden vier Spannungsteiler, deren Versorgunsspannungen an den Kontakten 54 zugeführt wird und deren Ausgangssignalspannung an den Kontakten 55 abgegriffen wird.

Die Widerstandswerte der magnetoresistiven Schichtstreifen 52 sind dem Magnetfeld an ihrem Ort proportional. Damit werden an den Ausgängen der Spannungsteiler 55 die über vier Maßstabsperioden gemittelten Ausgangssignaldifferenzen 5 sofort erhalten, ohne daß für diesen Fall irgendeine Auswerteschaltung notwendig wäre. Die Weiterverarbeitung der Ausgangssignaldifferenzen 5 zur Ermittelung der Verschiebung des Maßstabes gegenüber der Sensoranordnung entspricht dann dem oben Aufgeführten.

## Patentansprüche

1. Verfahren zur hochauflösenden Messung einer Linear- oder Drehposition mit einem Maßstab, der eine periodisch strukturierte Spur trägt, und mit einer dagegen in Längsrichtung des Maßstabes beweglichen Sensoranordnung, die im Abstand einer gleichmäßigen Sensorperiodenlänge (a) in Längsrichtung des Maßstabes gleiche Einzelsensorelemente enthält, wobei sich die Sensorperiodenlänge (a) aus der Periodenlänge (p) des Maßstabes durch Division durch eine ganze Zahl n > 2 ergibt, und Ausgangssignaldifferenzen von jeweils um eine halbe Maßstabsperiode (p) versetzt angeordneten Sensorelementen, die ein Sensorelementepaar bilden, gebildet werden,
   **dadurch gekennzeichnet,**
   daß in einem ersten Schritt die Nulldurchgänge der Ausgangssignaldifferenzen der Sensorpaare benutzt werden, um die Zahl der ganzen Sensorperiodenlängen (a), um die sich der Maßstab gegenüber der Sensoranordnung bewegt, zu ermitteln, und daß in einem zweiten Schritt zwischen den Ausgangssignaldifferenzen der beiden Sensorelementepaare, deren Ausgangssignaldifferenzen einem Nulldurchgang beiderseits benachbart sind, interpoliert wird, und zur Ermittlung der genauen Position des Maßstabes beide Werte addiert werden.

2. Verfahren nach Anspruch 1,
   **dadurch gekennzeichnet**,
   daß die Zahl der Sensorperiodenlängen durch Aufaddieren aller Nulldurchgänge der Ausgangssignaldifferenzen aller Sensorelementepaare ermittel wird.

3. Verfahren nach Anspruch 1 oder 2,
   **dadurch gekennzeichnet**,
   daß die Zahl der Sensorperiodenlängen (a) in zwei Schritten ermittel wird und sich im ersten Schritt nach einem inkrementalen Zählverfahren aus den Nulldurchgängen der Signale von zwei, vorzugsweise um ein Viertel der Maßstabsperiodenlänge (p) versetzten, Sensorelementepaaren die Zahl der ganzen Maßstabsperiodenlängen ergibt und in einem zweiten Schritt festgestellt wird, nach dem wievielten Sensorelement der Sensoranordnung ein Vorzeichenwechsel der Ausgangssignaldifferenz auftritt und eine entsprechende Anzahl von Sensorperiodenlängen addiert wird und bei negativem Anstieg der Ausgangssignaldifferenz im Nulldurchgang eine weitere Anzahl von Sensorperiodenlängen, die der halben Maßstabsperiodenlänge entspricht, addiert wird.

4. Verfahren nach einem der Ansprüche 1 bis 3,
   **dadurch gekennzeichnet**,

daß die Zahl der Sensorperiodenlängen in zwei Schritten ermittelt wird und sich im ersten Schritt nach einem inkrementalen Zählverfahren aus den Nulldurchgängen der Signale von zwei, vorzugsweise um ein Viertel der Maßstabsperiodenlänge, versetzten Sensorelementepaaren die Zahl der halben Maßstabsperiodenlängen ergibt und in einem zweiten Schritt festgestellt wird, nach dem wievielten Sensorelement ein Vorzeichenwechsel der Ausgangssignaldifferenz auftritt, und eine entsprechende Anzahl von Sensorperiodenlängen addiert wird.

5. Verfahren nach einem der Ansprüche 1 bis 4,
   **dadurch gekennzeichnet**,
   daß zur Erhöhung der Interpolationssicherheit und zur Verminderung des Einflusses von Maßstabsfehlern die Signale von mehreren Einzelsensorelementen gemittelt werden, die jeweils um eine ganze Maßstabsperiodenlänge oder um ein Vielfaches davon voneinander entfernt angeordnet sind.

6. Verfahren nach Anspruch 3 oder 4,
   **dadurch gekennzeichnet**,
   daß die Zählung der Maßstabsperiodenlängen, die Zählung der Sensorperiodenlängen oder die Interpolation zur genauen Positionsbestimmung wahlweise für bestimmte Zeiten eingestellt wird.

7. Verfahren nach Anspruch 6,
   **dadurch gekennzeichnet**,
   daß die Einstellung der Zählungen oder der Interpolation von der Verfahrgeschwindigkeit des Maßstabes gegenüber der Sensoranordnung gesteuert wird.

8. Verfahren nach einem der Ansprüche 1 bis 7,
   **dadurch gekennzeichnet**,
   daß als Maßstab ein regelmäßiger optischer Gittermaßstab und als Sensoranordnung auf einem Chip in regelmäßigem Abstand befindliche gleiche streifenförmige optoelektronische Bauelemente, beispielsweise Fotodioden, Fotowiderstände oder Fototransistoren, verwendet werden.

9. Verfahren nach einem der Ansprüche 1 bis 8,
   **dadurch gekennzeichnet**,
   daß ein periodisch magnetisierter Maßstab und als Einzelsensorelemente auf einem Chip in regelmäßigem Abstand befindliche gleiche magnetoresistive Schichtstreifen verwendet werden.

10. Verfahren nach Anspruch 9,
    **dadurch gekennzeichnet**,
    daß magnetoresistive Schichtstreifen mit gleichen Barberpolstrukturen, die unter gleichem Winkel angeordnet sind, verwendet werden.

11. Verfahren nach Anspruch 9 oder 10,
    **dadurch gekennzeichnet**,
    daß die magnetoresistiven Schichtstreifen, die die Einzelsensorelemente darstellen, durch Verbindungsleitungen elektrisch hintereinander geschaltet sind und so Spannungsteiler mit je zwei Widerständen bilden, an deren Ausgang die Ausgangssignaldifferenz als Spannungswert gegenüber einem festen Spannungswert direkt abgegriffen wird.

12. Verfahren nach Anspruch 5 und 11,
    **dadurch gekennzeichnet**,
    daß die Widerstände der Spannungsteiler jeweils aus gleichvielen hintereinander geschalteten magnetoresistiven Schichtstreifen bestehen, die jeweils um eine ganze Maßstabsperiode gegeneinander versetzt sind und so ein über mehrere Maßstabsperioden gemitteltes Signal erhalten wird.

## Claims

1. Method for high-resolution measurement of a linear or rotational position using a scale with a periodically structured track and a sensor arrangement capable of moving in relation to the track along the length of the scale and comprising identical individual sensor elements arranged along the length of the scale at intervals of a uniform sensor period length (a), with the sensor period length (a) being derived from the period length (p) of the scale by dividing the latter by an integer n > 2, and output signal differentials being generated by sensor elements forming sensor element pairs which are mutually offset by half a scale period (p), characterised in that the zero crossings of the output signal differentials generated by the sensor pairs are used during the first step to determine the number of whole sensor period lengths (a) by which the scale moves in relation to the sensor arrangement, and that, during the second step, interpolation is carried out between the output signal differentials of the two pairs of sensor elements whose output signal differentials are adjacent to a zero crossing on both sides, with both values being added together in order to determine the exact position of the scale.

2. Method according to Claim 1, characterised in that the number of sensor period lengths is determined by adding all the zero crossings of the output signal differentials of all pairs of sensor elements.

3. Method according to Claims 1 or 2, characterised in that the number of sensor period lengths (a) is determined in two steps during the first of which the number of total scale period lengths (p) is derived according to an incremental pulse-count method from the zero crossings of the signals of two pairs of sensor elements, preferably offset by a quarter of the scale period length (p), and during the second of which the number of the sensor element in the sensor arrangement after which the sign of the output signal differential changes is determined and a corresponding number of sensor period lengths added together, and, if the output signal differential shows a negative rise at the zero crossing, a further number of sensor period lengths equivalent to half the length of the scale period is added.

4. Method according to one of Claims 1 to 3, characterised in that the number of sensor period lengths is determined in two steps during the first of which the number of half scale period lengths is derived according to an incremental pulse-count method from the zero crossings of the signals of two pairs of sensor elements, preferably offset by a quarter of the scale period length, and during the second of which the number of the sensor element in the sensor arrangement after which the sign of the output signal differential changes is determined and a corresponding number of sensor period lengths added together.

5. Method according to one of Claims 1 to 4, characterised in that, in order to increase the reliability of the interpolation process and reduce the impact of scale errors, the signals of several individual sensor elements, separated from each other by the length of one whole scale period or a multiple thereof, are averaged.

6. Method according to Claims 3 or 4, characterised in that the counting of scale period lengths, the counting of sensor period lengths or the interpolation required for accurate position detection is adjusted to set times at the user's discretion.

7. Method according to Claim 6, characterised in that the setting of the counting or interpolation processes is controlled by the traverse rate of the scale in relation to the sensor arrangement.

8. Method according to Claims 1 to 7, characterised in that a regular optical index grating is used as a scale and identical, strip-like optoelectronic components arranged at regular intervals on a chip, e.g. photodiodes, photoresistors or phototransistors, are used as a sensor arrangement.

9. Method according to Claims 1 to 8, characterised in that a periodically magnetised scale is used, with identical laminated magnetoresistive strips arranged at regular intervals on a chip being used as individual sensor elements.

10. Method according to Claim 9, characterised in that laminated magnetoresistive strips are used with identical Barber pole structures arranged at the same angle.

11. Method according to Claims 9 or 10, characterised in that the laminated magnetoresistive strips constituting the individual sensor elements are connected in series by link circuits, thus forming voltage dividers with two resistors each, at the output of which the output signal differential is picked up directly as a voltage value in relation to a fixed voltage level.

12. Method according to Claims 5 and 11, characterised in that the resistors of the voltage dividers each consist of an equal number of series-connected laminated magnetoresistive strips which are mutually offset by a whole scale period, so that the signal obtained is averaged over several scale periods.

## Revendications

1. Procédé de mesure à haute résolution d'une position linéaire ou tournante à l'aide d'une échelle qui porte une piste structurée périodiquement, et d'un système de capteurs mobile par rapport à cette dernière dans le sens longitudinal de l'échelle, et comportant des éléments capteurs isolés identiques, distants dans le sens longitudinal de l'échelle d'une longueur de période régulière de capteurs (a), la longueur de période de capteur (a) résultant de la longueur de période (p) de l'échelle par division par un nombre entier n > 2, et des différence de signaux de sortie étant formées à partir d'éléments capteurs respectifs suivant un décalage d'une demi-période d'échelle (p), qui forment une paire d'éléments capteurs, caractérisé en ce que, dans une première étape les passages par zéro des différences des signaux de sortie des paires de capteurs sont utilisés pour déterminer le nombre des longueurs de période de capteurs complètes (a) sur lesquelles l'échelle se déplace par rapport au système de capteurs, et en ce que dans une deuxième étape, on effectue une interpolation entre les différences des signaux de sortie des deux paires d'éléments capteurs dont les différences des signaux de sortie sont voisines de part et d'autre d'un passage par zéro et les deux valeurs sont additionnées ensemble pour déterminer la position exacte de l'échelle.

2. Procédé selon la revendication 1, caractérisé en ce que le nombre des longueurs de période de capteurs est déterminé par addition de tous les passages par zéro des différences des signaux de sortie de toutes les paires d'éléments capteurs.

3. Procédé selon la revendication 1 ou 2, caractérisé en ce que le nombre des longueurs de période de capteurs (a) est déterminé en deux étapes et en ce que, dans la première étape, le nombre des longueurs de période d'échelle complètes résulte, d'après une méthode de comptage incrémental, des passages par zéro des signaux de deux paires d'éléments capteurs, de préférence décalées d'un quart de la longueur de période d'échelle (p), et dans une deuxième étape, on constate après quel nième élément capteur du système de capteurs intervient un changement de signe de la différence des signaux de sortie et on additionne un nombre correspondant de longueurs de période de capteurs et, en cas de croissance négative de la différence des signaux de sortie dans le passage par zéro, on additionne un autre nombre de longueurs de période de capteurs correspondant à la demi-longueur de période d'échelle.

4. Procédé selon l'une des revendications 1 à 3, caractérisé en ce qu'on détermine en deux étapes le nombre des longueurs de période de capteurs et en ce que, dans la première étape, le nombre des demi-longueurs de période d'échelle résulte d'après une méthode de comptage incrémental, des passages par zéro des signaux de deux paires d'éléments capteurs, de préférence décalées d'un quart des longueurs de période d'échelle et, dans une deuxième étape, on constate après quel nième élément capteur intervient un changement de signe de la différence des signaux de sortie, et on additionne un nombre correspondant de longueurs de période de capteurs.

5. Procédé selon l'une des revendications 1 à 4, caractérisé en ce que pour accroître la sûreté de l'interpolation et pour réduire l'influence des erreurs d'échelle, on effectue la moyenne des signaux de plusieurs éléments capteurs isolés qui sont respectivement éloignés l'un de l'autre d'une longueur de période d'échelle complète ou d'un multiple de celle-ci.

6. Procédé selon la revendication 3 ou 4, caractérisé en ce que le comptage des longueurs de période d'échelle, le comptage des longueurs de période des capteurs ou l'interpolation pour la détermination précise de la position sont réglés au choix pour des durées déterminées.

7. Procédé selon la revendication 6, caractérisé en ce que le réglage des comptages ou de l'interpolation est commandé par la vitesse de déplacement de l'échelle par rapport au système de capteurs.

8. Procédé selon l'une des revendications 1 à 7, caractérisé en ce que, comme échelle, on utilise une échelle optique à réseau régulier et, comme système de capteurs, on utilise des composants opto-électroniques identiques en forme de bande disposés à intervalles réguliers sur une puce, par exemple des photodiodes, des photorésistances ou des phototransistors.

9. Procédé selon l'une des revendications 1 à 8, caractérisé en ce qu'on utilise une échelle aimantée périodiquement et comme éléments capteurs isolés, des couches identiques en forme de bande à effet magnétorésistif, disposées à intervalles réguliers sur une puce.

10. Procédé selon la revendication 9, caractérisé en ce qu'on utilise des couches en forme de bande à effet magnétorésistif avec des structures polaires Barber identiques qui sont disposées sous un même angle.

11. Procédé selon la revendication 9 ou 10, caractérisé en ce que les couches en forme de bande à effet magnétorésistif qui représentent les éléments capteurs isolés, sont reliées électriquement en série les unes derrière les autres par des conducteurs de liaison et forment ainsi des diviseurs de tension comprenant chacun deux résistances, la différence des signaux de sortie étant directement délivrée à leur sortie comme valeur de tension par rapport à une valeur de tension fixe.

12. Procédé selon les revendications 5 et 11, caractérisé en ce que les résistances des diviseurs de tension sont constituées d'un nombre identique de couches en forme de bande à effet magnétorésistif reliées en série les unes derrière les autres, qui sont décalées respectivement l'une par rapport à l'autre d'une période d'échelle complète, un signal moyen sur plusieurs périodes d'échelle étant ainsi obtenu.

Fig. 3

Fig. 4

Fig. 1

Fig. 2